(19)

Europäisches
Patentamt
European
Patent Office
Office européen
des brevets

(11) **EP 3 972 109 A1**

(12) **EUROPEAN PATENT APPLICATION**

(43) Date of publication:
**23.03.2022 Bulletin 2022/12**

(21) Application number: **20197078.7**

(22) Date of filing: **18.09.2020**

(51) International Patent Classification (IPC):
**H02M 7/219** (2006.01)     **H02M 7/5387** (2007.01)
**H02M 1/00** (2006.01)

(52) Cooperative Patent Classification (CPC):
**H02M 7/219; H02M 7/53871;** H02M 1/0054;
H02M 1/0058

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Infineon Technologies Austria AG
9500 Villach (AT)**

(72) Inventors:
• **KOLAR, Johann
8044 Zürich (CH)**
• **AZURZA, Jon
8051 Zürich (CH)**
• **HAIDER, Michael
8044 Zürich (CH)**
• **MIRIC, Spasoje
8032 Zürich (CH)**

(74) Representative: **Westphal, Mussgnug & Partner,
Patentanwälte mbB
Werinherstraße 79
81541 München (DE)**

(54) **SINUSOIDAL TRIANGULAR CURRENT MODE CONTROL FOR POWER CONVERTER**

(57)     A power conversion method and a power converter are disclosed. The method includes providing a phase current reference (Ia*, Ib*, Ic*) for at least one phase (11, 12, 13) of a power converter, wherein the at least one phase (11, 12, 13) comprises an inductor (21, 22, 23) and a switching stage (31, 32, 33) coupled to the inductor (21, 22, 23); defining a current band value (Ibnd; Ibnda(t), Ibndb(t), Ibndc(t)) for the at least one phase (11, 12, 13); calculating a first current limit (Iatop, Ibtop, Ictop) and a second current limit (Iabot, Ibbot, Icbot) based on the phase current reference (Ia*, Ib*, Ic*) and the current band value (Ibnd; Ibnda(t), Ibndb(t), Ibndc(t)); and modulating a phase current (Ia, Ib, Ic) of the at least one phase (11, 12, 13) such that the phase current (Ia, Ib, Ic) oscillates between the first current limit (Iatop, Ibtop, Ictop) and the second current limit (Iabot, Ibbot, Icbot).

FIG 2

**Description**

This disclosure relates in general to a power conversion method and a power converter.

A power converter may be operated in a triangular current mode (TCM), which is an operating mode in which a current generated by the power converter has a triangular waveform. TCM is a technique to achieve zero voltage switching (ZVS) of switches employed in one or more switching stages of the power converter. ZVS includes that the voltage across a respective switch is essentially zero when the switch switches on. This helps to reduce switching losses and, in particular, enables the use of superjunction transistor devices in a power converter.

TCM may be used in a rectifier, such as a PFC rectifier, as well as in an inverter. A PFC rectifier is configured to generate a direct voltage based on one or more alternating input voltages, and an inverter is configured to generate one or more alternating output currents based on a direct input voltage. Both in a PFC rectifier and an inverter one or more curents are generated the average of which has a sinusoidal waveform.

A drawback of TCM for generating a sinusoidal current, however, is that the frequency of the triangular current and, therefore, a switching frequency of switches in the switching stage that is used to generate the triangular current, varies within a wide frequency range of one period of the current. In a 3-phase PFC converter, for example, a maximum switching frequency may be up to 15 times, or more, of a minimum switching frequency, so that the switching frequency ranges between the minimum switching frequency and 15 times or more of the minimum switching frequency. This strong variation of the switching frequency makes the design and optimization of EMI (Electromagnetic Interference) filters a difficult task and creates furthermore additional switching losses at peak switching frequencies.

There is therefore a need to reduce the frequency range over which the switching frequency of a power converter operated in TCM varies.

One example relates to a method. The method includes providing a phase current reference for at least one phase of a power converter, wherein the at least one phase comprises an inductor and a switching stage coupled to the inductor, defining a current band value for the at least one phase, calculating a first current limit and a second current limit based on the phase current reference and the current band value, and modulating a phase current of the at least one phase such that the phase current oscillates between the first current limit and the second current limit.

Another example relates to a power converter. The power converter includes at least one phase comprising an inductor and a switching stage coupled to the inductor, and a controller. The controller is configured to provide a phase current reference for the at least one phase, define a current band value for the at least one phase, calculate a first current limit and a second current limit based on the phase current reference and the current band value, and modulate a phase current of the at least one phase such that the phase current oscillates between the first current limit and the second current limit.

Examples are explained below with reference to the drawings. The drawings serve to illustrate certain principles, so that only aspects necessary for understanding these principles are illustrated. The drawings are not to scale. In the drawings the same reference characters denote like features.

Figure 1 shows a circuit diagram of a 3-phase power converter according to one example;

Figure 2 shows one example of a 3-phase power converter operated as a rectifier;

Figures 3A and 3B illustrate different examples of a capacitor circuit of the power converter;

Figure 4 shows signal diagrams of voltages that may be received by the power converter;

Figure 5 illustrates voltages received by the power converter, a current in one phase and a switching frequency of switches in one phase when operating a 3-phase power converter of the type shown in Figure 2 in a conventional TCM;

Figure 6 illustrates the current illustrated in Figure 4 in several drive cycles of switches in the respective phase,

Figure 7 illustrates one example of a power conversion method using TCM and having reduced switching frequency range;

Figures 8A to 8D show signal diagrams that illustrate one example of a method according to Figure 7;

Figures 9A - 9C illustrate examples of a current reference controller and a phase current controller of a controller that is configured to operate the power converter in accordance with the method illustrated in Figure 7;

Figure 10 illustrates the operating principle of hysteresis controllers employed in the controller according to Figure 9;

Figure 11 shows a modification of the controller shown in Figure 9;

Figures 12A and 12B illustrate examples for selecting a current band adaption factor dependent on an output power of the power converter;

Figures 13A - 13D show signal diagrams that illustrate further examples of a method according to Figure 7;

Figure 14 illustrates another example of a phase current controller;

Figure 15 shows a shows a circuit diagram of a 1-phase (single phase) power converter according to one example;

Figure 16 shows one example of a current reference controller of the power converter according to Figure 15;

Figure 17 shows one example of a 3-phase power converter operated as an inverter; and

Figure 18 shows one example of a controller configured to control operation of the power converter according to Figure 17.

In the following detailed description, reference is made to the accompanying drawings. The drawings form a part of the description and for the purpose of illustration show examples of how the invention may be used and implemented. It is to be understood that the features of the various embodiments described herein may be combined with each other, unless specifically noted otherwise.

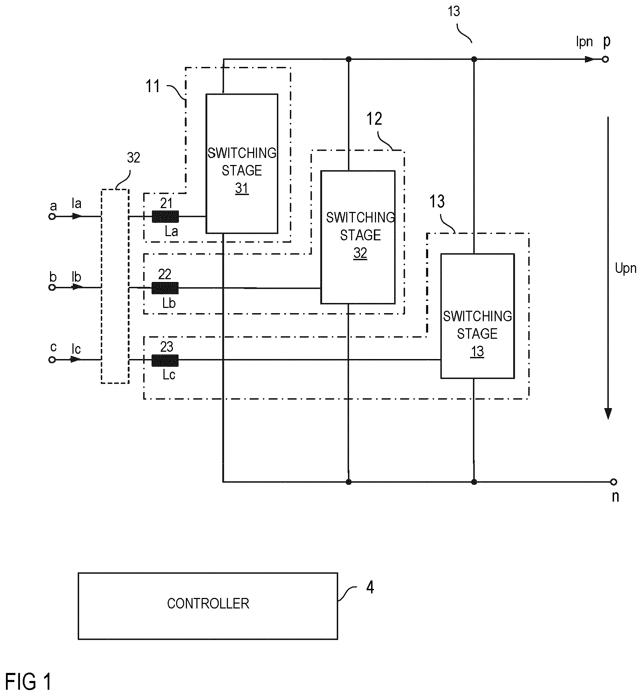

Figure 1 illustrates a circuit diagram of a power converter according to one example. The power converter according Figure 1 is a 3-phase converter and includes three phases 11, 12, 13 each connected between a respective one of three AC nodes a, b, c and two DC nodes p, n. Each phase 11, 12, 13 includes an inductor 21, 22, 23 coupled to a respective one of the three AC nodes a, b, c. The inductors 21, 22, 23 may directly be connected to the AC nodes a, b, c. Alternatively, as illustrated in dashed lines, a filter 32, such as an EMI filter may be connected between the AC nodes a, b, c and the inductors 21, 22, 23. Further, each phase 11, 12, 13 includes a switching stage 31, 32, 33 connected between the inductor 21, 22, 23 of the phase 11, 12, 13 and the DC nodes p, n.

In the following, the AC nodes a, b, c are also referred to as first, second, and third AC nodes, respectively; the phases 11, 12, 13 are also referred to as first, second, and third phases, respectively; the inductors 21, 22, 23 are also referred to as first, second, and third inductors, respectively; and the switching stages 31, 32, 33 are also referred to as first, second, and third switching stages, respectively.

Referring to Figure 1, the power converter further includes a controller (drive circuit) 4 that is configured to control operation of the switching stages 11, 12, 13. More specifically, the controller 4 is configured to control operation of switches (not shown in Figure 1) included in the switching stages 11, 12, 13.

The power converter according to Figure 1 may be operated as a rectifier, such as a PFC rectifier, or as an inverter. In the first case, the power converter receives alternating input voltages at the AC nodes a, b, c and is configured, using a switched-mode operation of the switching stages 11, 12, 13, to provide a (regulated) direct voltage $U_{pn}$ and a direct current $I_{pn}$ at the DC nodes. In the second case, the power converter receives a direct voltage $U_{pn}$ at the DC nodes and is configured, using a switched-mode operation of the switching stages 11, 12, 13, to provide alternating output currents at the AC nodes a, b, c. In both cases, phase currents $I_a$, $I_b$, $I_c$, which are currents through the inductors 21, 22, 23, are controlled such that averages of these currents essentially have a sinusoidal waveform. "Average" in this context means an average over one or several cycles of the switched-mode operation of the switching stages 11, 12, 13. Frequencies of the sinusoidal phase currents $I_a$, $I_b$, $I_c$ are dependent on the specific application. (1) A PFC rectifier, for example, is configured to generate the DC voltage $U_{pn}$ based on three alternating grid voltages. In this case, the average phase currents may be controlled to have a frequency which essentially equals the frequency of the received grid voltages. (2) A solar inverter, for example, is configured to convert a DC voltage $U_{pn}$ received from a solar panel to alternating currents $I_a$, $I_b$, $I_c$ that are fed into a power grid. In this case, the average phase currents may be controlled to have a frequency which essentially equals the frequency of the power grid. (3) 2) A motor drive inverter, for example, is configured to convert a DC voltage $U_{pn}$ received from a battery (or a PFC rectifier) to alternating currents $I_a$, $I_b$, $I_c$ that are received by a motor. In this case, the average phase currents may be controlled to have varying frequencies as requested by a motor controller.

In the following, at first, operating the power converter as a rectifier, in particular as a PFC rectifier is explained. Operating the power converter as an inverter is explained herein further below.

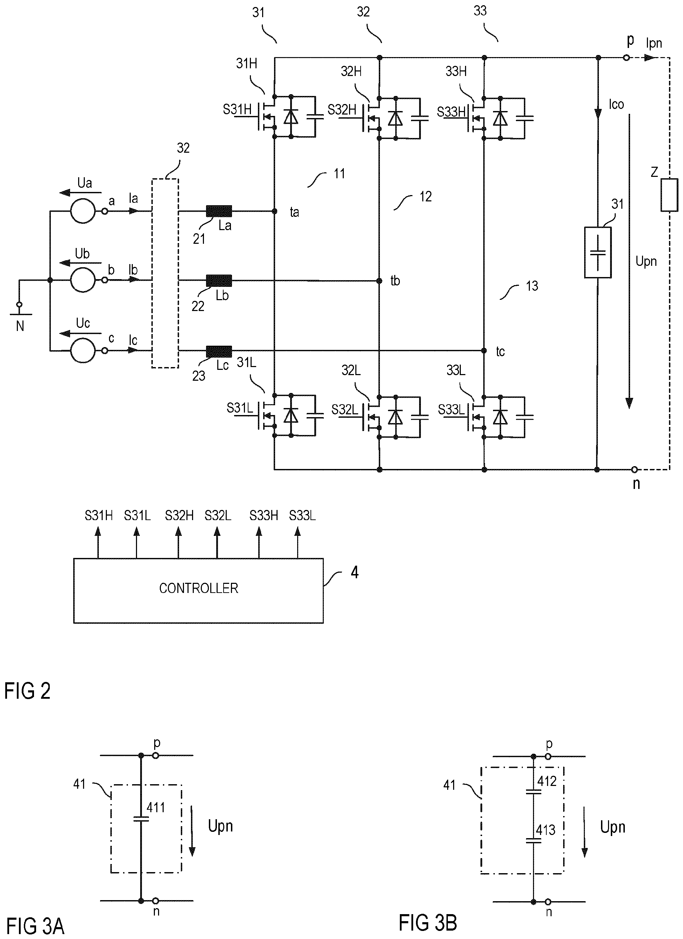

Figure 2 illustrates one example of a power converter that is configured to operate as a rectifier, in particular as a PFC rectifier. This power converter is configured to receive a respective one of three input voltages $U_a$, $U_b$, $U_c$ at each of the three AC nodes a, b, c. More specifically, the power converter receives a first input voltage $U_a$ at the first

AC node a, a second input voltage Ub at the second AC node b, and a third input voltage Uc at the third AC node c. The input voltages Ua, Ub, Uc are referenced to a common reference node (ground node) N, for example.

Referring to Figure 2, the power converter further includes an output capacitor circuit 41 connected between the DC nodes p, n. The DC voltage Upn is available across the output capacitor circuit 41 between the DC nodes p, n and may be received by a further power converter (not illustrated). The DC voltage Upn may also be referred to as DC link voltage, the DC nodes p, n may also be referred to as DC link nodes, and the capacitor circuit 3 may also be referred to as DC link capacitor circuit in a power converter operated as PFC rectifier. In this type of power converter, the AC nodes a, b, c are input nodes through which power is received by the power converter, and the DC nodes p, n are output nodes through which power is supplied to a load (illustrated in dashed lines in Figure 2).

In the example shown in Figure 2, each of the three switching stages 11, 12, 13 includes a half-bridge with a high-side switch 31H, 32H, 33H and a low-side switch 31L, 32L, 33L. The high-side switch 31H, 32H, 33H and the low-side switch 31L, 32L, 33L of each of the half-bridges are connected in series between the DC link nodes p, n. Further, each of the half-bridges includes a tap ta, tb, tc, which is a circuit node between the high-side switch 31H, 32H, 33H and the low-side switch 31L, 32L, 33L of the respective half-bridge. Each of the taps ta, tb, tc is connected to a respective one of the inductors La, Lb, Lc, that is, tap ta of a first one of the half-bridges is connected to a first one 21 of the inductors 21, 22, 23, tap tb of a second one of the half-bridges is connected to a second one 22 of the inductors 21, 22, 23, and tap tc of a third one of the half-bridges is connected to a third one 23 of the inductors 21, 22, 23. A converter bridge with three half-bridges as illustrated in Figure 2 is known as B6 bridge.

It should be noted that implementing the switching stages as illustrated in Figure 2 is only an example. Other switching stage topologies may be used as well.

In the example shown in Figure 2, operating the switching stages 11, 12, 13 by the controller 4 includes operating the switches S31L-S33H in the switching stages 11, 12, 13. More specifically, the controller 4 is configured to generate drive signals S31H-S33L, wherein each drive signal is received by a respective one of the switches S31H-S33L in the switching stages 11, 12, 13 and is configured to switch on or off the respective switch 31H-33L.

The switches S31H-S33L can be conventional electronic switches with a load path and a rectifier element (illustrated as diode in Figure 2) connected in parallel with the load path. The rectifier element can be a discrete element or can be an integral part of the respective switch. According to one example, as illustrated in Figure 1, the switches S31H-S33L are MOSFETs, such as n-type enhancement MOSFETs. The MOSFETs may be based on silicon (Si) or a wide-bandgap material such as silicon carbide (SiC). According to one example, the MOSFETs are superjunction MOSFETs.

A MOSFET includes an internal diode, which is usually referred to as body diode, that may be used as the rectifier element. In a MOSFET, the load path is a circuit path between a drain node and a source node. A MOSFET further includes a gate node for receiving the drive signal. Usually, the drive signal is a voltage received between the gate node and the source. In Figure 1, however, the drive signals S31H-S33L are only schematically illustrated.

Implementing the switches S31H-S33L as MOSFETs, however, is only an example. Any other kind of transistors such as HEMTs (High Electron Mobility Transistors) may be used as well.

Each of the switches S31H-S33L may inevitably include an output capacitance. In a MOSFET, for example, the output capacitance includes a drain-source capacitance and a gate-drain capacitance. In Figure 2, the output capacitances of the switches S31H-S33L are represented by capacitors connected in parallel with the load path. These capacitors represent the drain-source capacitances; the gate-drain capacitances are not illustrated.

The DC link capacitor circuit 41 may be implemented in various ways. According to one example illustrated in Figure 3A, the DC link capacitor circuit 41 includes a single capacitor 411 connected between the output nodes p, n. According to one another example illustrated in Figure 3B, the DC link capacitor circuit 41 includes a first output capacitor 412 and a second output capacitor 413 that are connected in series between the DC nodes p, n. In each case, the DC voltage Upn is the voltage between the two DC nodes p, n.

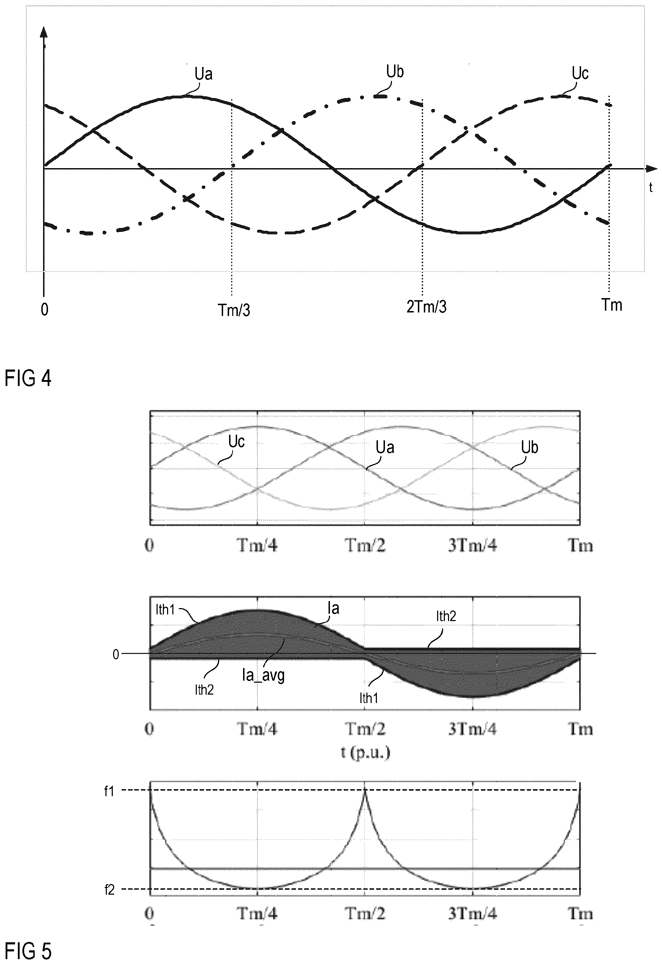

According to one example, the input voltages Ua, Ub, Uc received by the power converter are alternating input voltages such as sinusoidal input voltages. A phase shift between each pair of these input voltages Ua, Ub, Uc is different from 0°, for example. Figure 4 shows signal diagrams of sinusoidal input voltages Ua, Ub, Uc during one period of each of these input voltages Ua, Ub, Uc. In this example, the phase shift between each pair of these input voltages Ua, Ub, Uc is 120° ($2\pi/3$). Each of the three sinusoidal input voltages Ua, Ub, Uc periodically changes between a minimum voltage level and a maximum voltage level, wherein the maximum voltage level is a positive voltage level and the minimum voltage level is a negative voltage level in this example. According to one example, a magnitude (absolute value) of the minimum level essentially equals a magnitude (absolute value) of the maximum level and the three input voltages Ua, Ub, Uc have essentially the same minimum voltage level and the same maximum voltage level. Further, the three input voltages Ua, Ub, Uc may have essentially the same frequency fm. This frequency fm is between 50 Hz and 60 Hz, for example. A duration Tm of one period of the input voltages Ua, Ub, Uc is the reciprocal of the frequency fm, Tm=1/fm.

As each of the input voltages Ua, Ub, Uc is the voltage at the AC node a, b, c of a respective phase 11, 12, 13 these voltages Ua, Ub, Uc are also referred to as phase voltages in the following.

Figure 4 illustrates the input voltages Ua, Ub, Uc over one period. In the following, the plurality of the input voltages Ua, Ub, Uc is also referred to as input voltage system. Further, for the purpose of illustration it is assumed that a certain phase angle $\alpha$ of the input voltage system corresponds to a phase angle $\alpha$ of the first input voltage Ua, wherein $\alpha = 0$ is the phase angle at the beginning of a positive halfwave of the first input voltage Ua, in this example.

The magnitude (absolute value) of the maximum voltage level and the minimum voltage level of each of the input voltages Ua, Ub, Uc may also be referred to as amplitude of the input voltages Ua, Ub, Uc. Root mean square (RMS) values of the input voltages Ua, Ub, Uc are given by the amplitude divided by the square root of 2, that is,

$$A_{RMS} = \frac{A}{\sqrt{2}},$$

where A denotes the amplitude of any one of the input voltages Ua, Ub, Uc and $A_{RMS}$ denotes the respective RMS value. According to one example, the input voltages Ua, Ub, Uc are 230 $V_{RMS}$ grid voltages. Amplitudes of the individual input voltages Ua, Ub, Uc are 325 V in this example.

Operating the power converter of the type shown in Figure 2 as a PFC rectifier may include (a) regulating the DC voltage Upn such that it has a predefined voltage level, and (b) regulating each of three phase currents Ia, Ib, Ic such that a shape of the respective current waveform essentially equals the shape of the voltage waveform of the respective input voltage Ua, Ub, Uc. Thus, when the input voltages Ua, Ub, Uc are sinusoidal voltages, the phase currents Ia, Ib, Ic are regulated such that they, in average, essentially have sinusoidal waveforms, wherein there may be a predefined phase shift between the phase current Ia, Ib, Ic and the respective input voltage Ua, Ub, Uc. The phase current Ia, Ib, Ic of each phase is the current through the respective inductor 21, 22, 23.

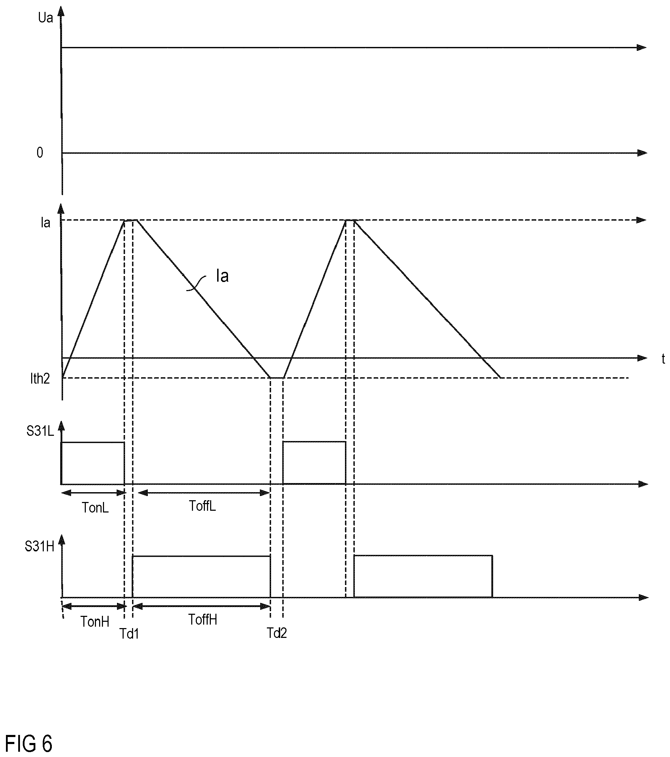

Figures 5 and 6 illustrate one example of operating power converter in a conventional TCM (Triangular Current Mode), wherein Figure 5 illustrates, during one period of the input voltages Ua, Ub, Uc, the input voltages Ua, Ub, Uc, the phase current Ia of the first phase 11, and the switching frequency of the switches S31H, S31L in the first switching stage 31. This phase current Ia is also referred to as first phase current in the following. Figure 6 illustrates the phase current Ia during several drive cycles of the switches S31H, S31L in the first switching stage 11, and drive signals S31L, S31H of the switches of the first switching stage 31. These signals S31L, S31H can have an on-level that switches on the respective switch 31L, 31H or an off-level that switches on the respective switch 31L, 31H. Just for the purpose of illustration, an on-level is represented by a high signal level and an off-level is represented by a low signal level in the example shown in Figure 6.

It should be noted that, although Figures 5 and 6 illustrate regulating the first phase current Ia, this is only an example. The phase currents Ib, Ic in the second and third phases 12, 13 are regulated in the same way.

Referring to Figures 5 and 6, in the conventional TCM, the switches S31L, S31H in the switching stage are operated in such a way that the first phase current Ia, in a triangular fashion, oscillates between a first threshold Ith1 and a second threshold Ith2, wherein the first threshold Ith1 is regulated such that the phase current Ia has a desired average current level Ia avg and the second threshold Ith2 is selected such that a zero voltage switching (ZVS) is achieved. If, as illustrated in Figure 6, the input voltage Ua is positive (and the average input current is in phase with the input voltage) and the low-side switch S31L switches on, the phase current Ia increases and the respective inductor 21 is magnetized. When the phase current Ia reaches the first threshold Ith1 the low-side switch S31L switches off and the high-side switch 31H switches on, so that the phase current Ia flows through the high-side switch 31H. Referring to Figure 6, there may be a first dead time Td1 between switching off the low-side switch S31L and switching on the high-side switch 31H. During this dead time Td1the output capacitance of the high-side switch 31H is discharged and the output capacitance of the low-side switch 31L is charged before the phase current Ia flows through rectifier element of the high-side switch 31H.

When the phase current Ia flows through the high-side switch 31H the inductor 21 is demagnetized and the phase current Ia decreases. (The slope of the current Ia is dependent on a voltage across the inductor 21 and an inductance La of the inductor 21.) When the low-side switch S31L switches off a voltage across the low-side switch 31L increases to a voltage level which essentially equals the voltage level of the DC voltage Upn. This increase of the voltage across the low-side switch 31L causes the output capacitance of the low-side switch S31L to be charged.

Referring to Figure 6, the high-side switch S31H remains on until the phase current Ia reaches the second threshold Ith2. This second threshold Ith2 is selected such that the phase current Ia, during the on-time of the high-side switch S31H, changes its polarity, so that the inductor 21 is again magnetized. When the high-side switch S31H switches off, the phase current Ia continues to flow and discharges the output capacitance of the low-side switch S31L. This causes the voltage across the low-side switch S31L to decreases during a second dead time Td2 between switching off the high-side switch S31H and switching on the low-side switch. This second dead time Td2 may be long enough for the voltage across the low-side switch S31L to decrease to zero before the low-side switch S31L again switches on, that a zero voltage switching (ZVS) can be achieved.

It should be noted that the operating mode illustrated in Figures 5 and 6 is referred to as triangular current mode (TCM) although the current waveform of the phase current Ia is not perfectly triangular, mainly because of the dead times Td1, Td2. During these dead times Td1, Td2 the phase current Ia may increase, may decrease, or may remain essentially constant. Just for the purpose of illustration, in the example shown in Figure 6, the phase current Ia is drawn to be constant during the dead times Td1, Td2.

Usually, the second threshold Ith2 is close to zero and selected such that the energy stored in the inductor 21 after the phase current Ia has changed its direction is sufficient to discharge the output capacitance of one of the low-side switch 31L and the high-side switch. This second threshold Ith2 is negative when the input voltage Ua is positive (as illustrated in Figure 6) and positive when the input voltage Ua is negative. In the latter case, the high-side switch S31H essentially controls the average phase current, which is negative, and the output capacitance of the high-side switch S31H is discharged by the phase current Ia when the low-side switch S31L switches off.

As can be seen from Figure 5, in a conventional TCM, the switching frequency of the switches 31L, 31H in the switching stage 11 may vary over a wide frequency range, wherein in 3-phase power converter the switching frequency increases towards zero crossings of the input voltage Ua and decreases towards positive and negative peak values of the input voltage Ua. A ratio between a maximum switching frequency f1 and a minimum switching frequency may be up to 15 or even more. In a 3-phase power converter with a maximum output power of 10kW, for example, the switching frequency may range between about 40 kHz and 600 kHz. This strong variation of the switching frequency makes the design and optimization of EMI (Electromagnetic Interference) filters a difficult task. There is therefore a need to operate a power converter in TCM, in order to achieve ZVS, and, at the same time, reduce the variation of the switching frequency and/or a maximum switching frequency.

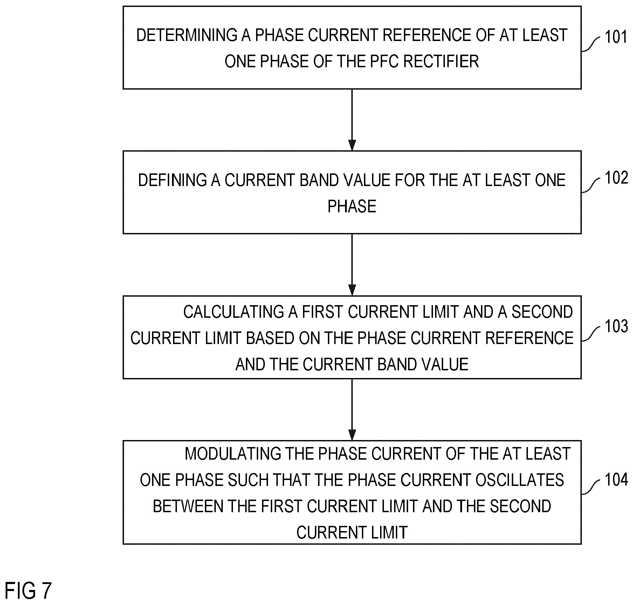

One example of a method for operating a power converter in TCM, with a reduced switching frequency range and a reduced maximum switching frequency is illustrated in Figure 7. This method includes determining a phase current reference of at least one phase of the power converter (101), defining a current band value for the at least one phase (102), calculating a first current limit and a second current limit based on the phase current reference and the current band value (103), and modulating the phase current of the at least one phase such that the phase current oscillates between the first current limit and the second current limit.

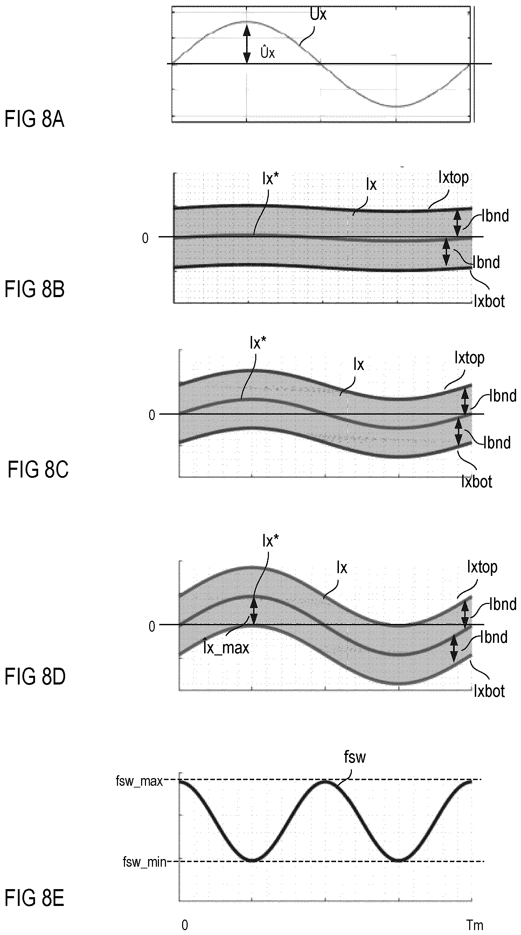

One example for operating the power converter in this way is illustrated in Figures 8A - 8E. Figure 8A denotes an input voltage Ux received by one phase of the power converter over one period of the input voltage Ux, wherein Ux represents and arbitrary one of the input voltages Ua, Ub, Uc. Figures 8B - 8D illustrates a phase current reference Ix* of the respective phase, the first and second current limits Ixtop, Ixbot, and the phase current Ix under different load conditions of the power converter. Figure 8D illustrates a variation of the switching frequency of switches in the switching stage of the respective phase. In Figures 8A - 8D, Ix denotes an arbitrary one of the three phase currents Ia, Ib, Ic; Ix* denotes the respective phase current reference, Ibnd denotes the current band value; and Ixtop and Ixbot denote the first and second current limits.

Oscillating the phase current Ix between the first and second current limits Ixtop, Ixbot includes a switched-mode operation of the switches in the respective switching stage. The "phase current reference Ix*", as used herein represents an average of the phase current Ix over one or more periods of the oscillating phase current Ix. A frequency of the switched mode operation of the switches in the respective switching stage is significantly higher than a frequency of the input voltages Ua, Ub, Uc so that the average phase current can be considered to be constant over several periods of the switched mode operation, but may vary of one period of the input voltages Ua, Ub, Uc. The phase current reference Ix*, for example, may have a sinusoidal waveform with a frequency that essentially equals the frequency of the input voltage Ux, and the phase current Ix has an essentially triangular waveform with a much higher frequency than the phase current reference Ix*.

According to one example, calculating the first and second current limits Ixtop, Ixbot based on the phase current reference Ix* and the current band Ibnd includes calculating the current limits such that the current limits Ixtop, Ixbot are symmetrical relative to a current level of the phase current reference Ix*, so that

$$Ixtop = Ix^* + Ibnd \qquad\qquad (1a)$$

$$Ixtop = Ix^* - Ibnd \qquad\qquad (1b).$$

As the oscillating frequency of the phase current Ix is much higher than the frequency of the input voltage Ux a signal waveform of the phase current Ix is not explicitly illustrated in Figures 8B - 8D. As will be explained in further detail herein below, the phase current Ix essentially has a triangular current waveform so that operating the power converter such that the phase current Ix oscillates between the first current limit Ixtop and the second current Ixbot has the effect that an average phase current Ix_avg of the respective phase essentially equals the phase current reference Ix*.

Examples for determining the phase current reference Ix* are explained in detail herein further below. The phase current reference Ix* of one phase may essentially be generated such that its waveform follows the waveform of the input voltage Ux received by the respective phase, wherein there may be phase shift between the phase current reference Ix* and the input voltage Ux. Thus, when the input voltage Ux is a sinusoidal voltage as illustrated in Figure 8A, the phase current reference Ix* and, therefore, the average phase current Ix_avg is essentially sinusoidal. An amplitude of the phase current reference Ix* may vary dependent on an output power of the power converter and increases as the output power increases. This is illustrated in Figures 8B - 8D, wherein Figure 8B illustrates the phase current reference Ix* under low load conditions, Figure 8C illustrates the phase current reference Ix* under medium load conditions, and Figure 8D illustrates the phase current reference Ix* under high load conditions.

In the example illustrated in Figures 8A - 8E, the current band value Ibnd is constant over one period of the input voltage Ux and independent of the output power of the power converter. In this case, the switching frequency of the switches in the respective switching stage and, therefore, the oscillating frequency of the phase current Ix varies in the same way over one period of the input voltage Ux.

Referring to Figure 8E, the switching frequency fsw varies between a minimum switching frequency fsw_min and a maximum switching frequency fsw_max. Both the minimum switching frequency fsw_min and the maximum switching frequency fsw_max and, therefore, the frequency range are dependent on the current band value Ibnd as follows:

$$fsw\_max = \frac{Upn}{8 \cdot Lx \cdot Ibnd} \qquad (2a)$$

$$fsw\_min = \frac{Upn}{8 \cdot Lx \cdot Ibnd} \cdot (1 - M^2) = fsw\_max \cdot (1 - M^2) \qquad (2b),$$

where Upn denotes the output voltage, Lx denotes the inductance of the inductor of the respective phase (that is, Lx denotes any one of La, Lb, Lc), and M denotes a modulation factor. The modulation factor M is dependent on a relationship between a peak voltage level Ûabc of the input voltage system (which, e.g., is 325V in a 230V$_{RMS}$ input voltage system) and the DC voltage Upn as follows:

$$M = \frac{2 \cdot \hat{U}abc}{Upn} \qquad (3).$$

As can be seen from equation (2a), the maximum switching frequency fsw_max, at a given inductance Lx and a given DC voltage Upn is inversely proportional to the current band value Ibnd, so that the maximum switching frequency fsw_max decreases as the current band value Ibnd increases.

According to one example, the current band value Ibnd is selected such that the upper current limit Ixtop is equal to zero or higher than zero (positive) and the lower current limit Ixbot is equal to zero or lower than zero (negative), in order to achieve ZVS. When the current band value Ibnd is constant, the upper current and lower current limits Ixtop, Ixbot, over one period of the respective input voltage Ux, vary in accordance with the phase current reference Ix*, wherein an amplitude of both the upper current limit Ixtop and the lower current limit Ixbot increases as the amplitude of the phase current reference Ix* increases. According to one example, the power converter is operated such that an amplitude of the phase current reference Ix* and, therefore, the average phase current Ix_avg are limited to a predefined maximum Îx_max. This maximum amplitude Îx_max is associated with a maximum output power Px_max of the respective phase. Figure 8D, illustrates an operating scenario of the power converter in which the phase current reference Ix* reaches the maximum amplitude Îx_max. According to one example, the current band Ibnd is selected such that it equals the maximum amplitude Îx_max,

$$Ibnd = \hat{I}x\_max \qquad (4a).$$

According to another example, the current band value Ibnd is adjusted dependent on the maximum amplitude Îx_max such that

$$Ibnd = \hat{I}x\_max + Im \qquad (4b),$$

wherein Im is a current margin that, dependent on the specific application, may be necessary to ensure ZVS. Calculating the current band value Ibnd in accordance with equation (4b) ensures that in each case the lower current limit Ixbot is more than the current margin Im below zero and that the upper current limit Ixtop is more than the current margin Im above zero. Im may be selected such that the energy stored in the respective inductor after the phase current crosses zero is sufficient to discharge the output capacitance(s) in the respective switching stage such that ZVS is achieved. In other applications, however, selecting Ibnd based on equation (4a) may be sufficient to ensure ZVS even when the amplitude of the phase current reference Ix* equals the maximum amplitude Îx_max, so that there may be time instances when one of the first current limit Ixtop and the second current limit Ixbot becomes zero.

The maximum amplitude Îx_max of the phase current Ix is associated with a maximum input or output power Px_max of the respective phase, wherein

$$Px\_\max = \frac{1}{2} \cdot \hat{I}x\_\max \cdot \hat{U}x \tag{5},$$

wherein Ûx is the amplitude of the input voltage. It should be noted that the maximum input or output power Px_max is the maximum average input or output power over one period of the respective input voltage Ux. Due to the sinusoidal input voltage Ux and the sinusoidal average phase currents Ix_avg the instantaneous input power varies (and has a sine-squared waveform).

According to one example, the maximum amplitude in each of the three phase is the same Îa_max = Îb_max = Îc_max = Îmax so that the three phases have the same maximum input power Pa_max = Pb_max = Pc_max. In this case and assuming that the three input voltages Ua, Ub, Uc have the same amplitude Ûa = Ûb = Ûc = Ûabc the maximum input and output power Pmax of the overall power converter is given by

$$Pmax = Pa\_\max + Pb\_\max + Pc\_\max = \frac{3}{2} \cdot \hat{I}\max \cdot \hat{U}abc \tag{6}.$$

The operating mode illustrated in Figures 8A - 8D may be referred to as sinusoidal TCM because the upper current limit Ixtop and the lower current limit Ixbot, which form an envelope of the phase current Ix, have a sinusoidal waveform (when the input voltage Ux is sinusoidal).

Referring to Figure 8E, the switching frequency fsw varies over one period of the input voltage Ux. However, it can be shown that using sinusoidal TCM the maximum switching frequency fsw_max can significantly be reduced as compared to a power converter of the same type and with the same maximum output power and operated using a conventional TCM. Using sinusoidal TCM the maximum switching frequency can be reduced to 25% or less of the maximum switching frequency of a comparable power converter operated using conventional TCM.

According to one example the current band value Ibnd is selected such that the maximum switching frequency fsw_max is between 100 kHz and 200 kHz, in particular between 100 kHz and 150 kHz. Referring to equation (2b) the frequency range is dependent on the maximum switching frequency fsw_max and the modulation index M.

As compared to operating the PFC rectifier in CCM (Continuous Current Mode), which is a conventional way of operating a PFC rectifier, operating the PFC rectifier in sinusoidal TCM may result in higher conduction losses, but definitely results in lower switching losses, wherein the reduction in switching losses may be higher than the increase in switching losses. Moreover, sinusoidal TCM, as compared to a conventional TCM, results in a significant reduction of the switching frequency range and a reduction of the maximum switching frequency fsw_max. the latter helps to reduce switching losses and may help to reduce the size and cost of an EMI filter.

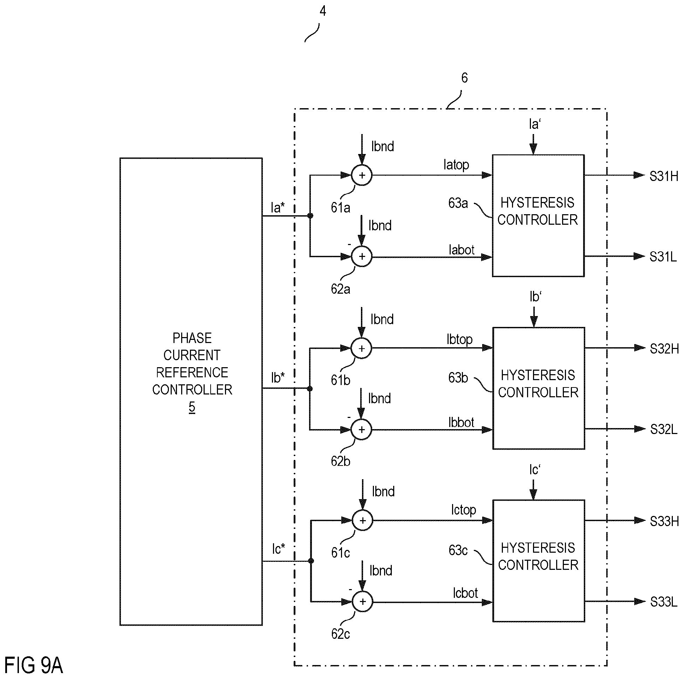

Figure 9A illustrates one example of a controller 4 that is configured to operate a power converter of the type shown in Figure 2 in accordance with the method explained with reference to Figures 7 and 8A - 8E. It should be noted that the block diagram shown in Figure 9A illustrates the functional blocks of the controller 4 rather than a specific implementation. Those functional blocks can be implemented in various ways. According to one example, these functional blocks are implemented using dedicated circuitry. According to another example, the controller is implemented using hardware and software. For example, the controller 4 includes a microcontroller and software executed by the microcontroller.

Referring to Figure 9A, the controller 4 includes a phase current reference controller 5, which briefly referred to as current reference controller in the following. This reference controller 5 is configured to provide three phase current references, a first phase current reference Ia* for controlling the current in the first phase 11, a second phase current reference Ib* for controlling the current in the second phase 12, and a third phase current reference Ic* for controlling the current in the third phase 13. Examples for implementing the current reference controller 5 are explained herein further below. The controller 4 further includes a phase current controller 6 that is configured to receive the phase current references Ia*, Ib*, Ic* and control the phase currents Ia, Ib, Ic by suitably driving the switches in the switching stages 31, 32, 33. For this, the phase current controller 6 generates drive signals S31H-S33L for driving the switches 31H-33L in the switching stages 31, 32, 33.

Referring to Figure 9A, the phase current controller 6 further includes three branches, wherein each of these branches is configured to operate a respective one of the switching stages 11, 12, 13. More specifically, each of the branches is configured to generate a low-side drive signal S31L, S32L, S33L received by the low-side switch 31L, 32L, 33L in the respective switching stage 11, 12, 13 and a high-side drive signal S31H, S32H, S33L received by the high-side switch 31H, 32H, 33H in the respective switching stage 11, 12, 13.

Referring to Figure 9A, based on each phase current reference Ia*, Ib*, Ic* and the current band value Ibnd, in each of the three branches, a respective first current limit Iatop, Ibtop, Ictop is calculated by an adder 61a, 61b, 61c in accordance with equation (1a) and a respective second current limit Iatop, Ibtop, Ictop is calculated by a subtractor 62a, 62b, 62c in accordance with equation (1b).

In each of the three branches a hysteresis controller 63a, 63b, 63c receives the respective first current limit Iatop, Ibtop, Ictop, the respective second current limit Iabot, Ibbot, Icbot, and an phase current signal Ia', Ib', Ic' and generates the respective low-side and high-side drive signals S31H-S33L. Each of the phase current signals Ia', Ib', Ic' represents the phase current Ia, Ib, Ic of the respective phase and can be obtained using a conventional current measurement circuit.

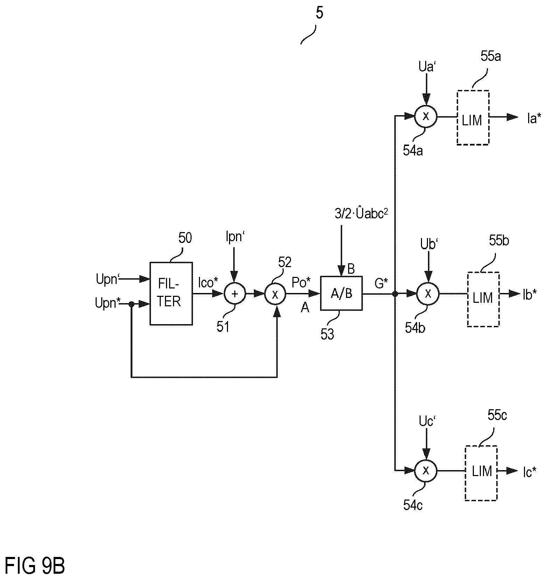

Figure 9B illustrates one example of the current reference controller 5. In this example, the reference current controller 5 is configured to receive a DC voltage reference Upn* and a DC voltage signal Upn' representing the DC voltage Upn, and is configured to generate the phase current references Ia*, Ib*, Ic* such that the DC voltage Upn essentially equals the DC voltage reference Upn*. This, however, is only an example. According to another example (not illustrated) the current reference controller 5 is configured to generate the current references Ia*, Ib*, Ic* such that a DC current Ipn provided to a load (such as a battery) equals a DC current reference.

Referring to Figure 9B, the current reference controller 5 receives the DC voltage signal Upn' that represents the DC voltage Upn. The DC voltage Upn may be measured in a conventional way by any kind of voltage measurement circuit (not shown) in order to obtain the DC voltage signal Upn'. The current reference controller 5 includes a first filter 51 that receives the DC voltage signal Upn' and an DC voltage reference Upn*. The DC voltage reference Upn* represents a desired voltage level of the DC voltage Upn.

The first filter 50 subtracts the DC voltage reference Upn* from the DC voltage signal Upn', for example, and filters the difference in order to generate an output signal Ico*. According to one example, this output signal Ico* represents a desired current into the output capacitor circuit 3 (see, Figure 2). The first filter 50 may have one of a proportional-integrative (PI) characteristic, a proportional-integrative-derivative (PID) characteristic, or the like. According to one example, the first filter 50 has a PI characteristic. This filter 50 may also be referred to as PI controller.

Referring to Figure 9B, an adder 51 receives the filter output signal Ico* and an output current signal Ipn'. The output current signal Ipn' represents a DC current (output current) Ipn of the power converter that is received by a load Z (illustrated) in dashed lines. The load Z may be any kind of load or load circuit configured to receive the DC voltage Upn and the output current Ipn. The output current Ipn may be measured in a conventional way by any kind of current measurement circuit (not shown) in order to obtain the output current signal Ipn'. An output signal of the adder 51 represents the desired current Ico into the output capacitor 14 plus the output current Ipn and is received by a multiplier 52. The multiplier 52 further receives the DC voltage reference Upn* and provides a multiplier output signal Po*, wherein this multiplier output signal Po* represents a desired output power of the power converter that is required to regulate the DC voltage Upn such that is essentially equals the DC voltage reference Upn*. The multiplier output signal Po*, which is also referred to output power reference Po* in the following, also represents an average input power of the power converter over one period of the input voltage system Ua, Ub, Uc. An instantaneous input power received at each of the three AC nodes a, b, c of the power converter 11, however, varies due to the alternating nature of the input voltages Ua, Ub, Uc.

Referring to Figure 9B, a divider 53 divides the output power reference Po* by a signal $3/2 \cdot \hat{U}abc^2$ that represents 1.5 times (3/2 times) the square of the amplitude $\hat{U}abc$ of the input voltages Ua, Ub, Uc. An output signal G* of the divider 73 represents an overall desired conductance of the power converter, wherein the overall desired conductance G* is the conductance that is required by the power converter in order to achieve the desired input power Po*. The overall desired conductance G* is also referred to as conductance reference in the following.

The current reference controller 5 further includes three output branches, wherein each of these output branches provides one of the phase current references Ia*, Ib*, Ic*. Each of the three output branches includes a multiplier 54a, 54b, 54c that receives the conductance reference G* and a respective input voltage signal Ua', Ub', Uc'. Each of these input voltage signals Ua', Ub', Uc' represents a respective one of the input voltages Ua, Ub, Uc. These input voltages may be measured in a conventional way by any kind of voltage measurement circuit (not shown) in order to obtain the input voltage signals Ua', Ub', Uc'. Output signals of the multipliers 54a, 54b, 54c represent the phase current references Ia*, Ib*, Ic* of the three phase. More specifically, a first multiplier 54a that receives an phase current signal Ua' representing the first input voltage Ua provides the phase current reference Ia* of the first phase 11, a second multiplier 54b that receives an phase current signal Ub' representing the second input voltage Ub provides the phase current reference Ib* of the second phase 12, and a third multiplier 54c that receives an phase current signal Uc' representing the third input voltage Uc provides the phase current reference Ic* of the third phase 13. These phase current references are also referred to as first, second, and third phase current references Ia*, Ib*, Ic* in the following.

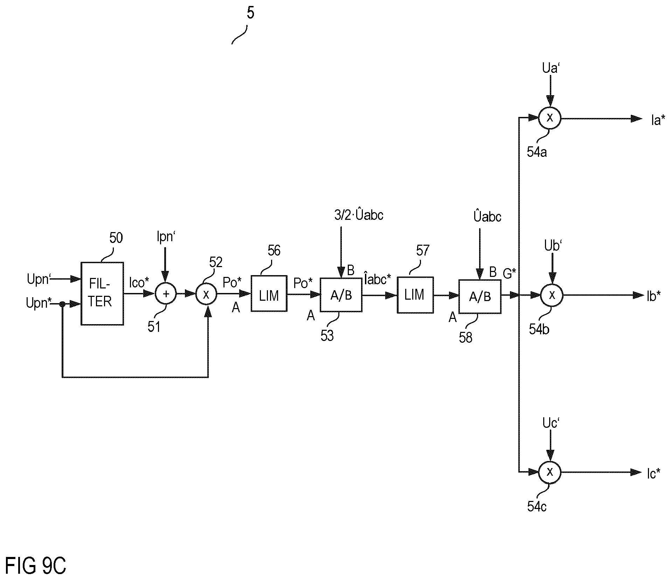

Optionally, as illustrated in dashed lines in Figure 9, a respective limiter 55a, 55b, 55c is connected downstream each multiplier 54a, 54b, 54c. Each of these limiters is configured to limit the phase current reference Ia*, Ib*, Ic* such that the magnitude of the phase current reference Ia*, Ib*, Ic* does not exceed a level defined by the maximum amplitude Imax, In this way the phase current reference Ia*, Ib*, Ic* are limited such that they do not exceed the maximum amplitude Imax. This however, may result in non-sinusoidal waveforms.

Figure 9C shows a modification of the current reference controller shown in Figure 9B. In the current reference controller according to Figure 9C, the (average) output power is limited and the amplitudes of the phase current references Ia*, Ib*, Ic* are limited, so that the phase current references Ia*, Ib*, Ic*, despite a possible limitation, have sinusoidal waveforms. In this example, a first limiter 56 receives the output power reference Po* and limits the output power reference Po* to a predefined maximum value that represents a maximum desired output power. Further, in this example, the divider 56 divides the (limited) output power reference Po* by 3/2Ûabc (instead of 3/2Ûabc$^2$ in the example shown in Figure 9B) so that the divider output signal represents an overall input current reference Îabc*. A further limiter 57 limits the overall input current reference Îabc* to a predefined value, and a further divider 58 divides the (limited) input current reference Îabc* by Ûabc to obtain the conductance reference G*.

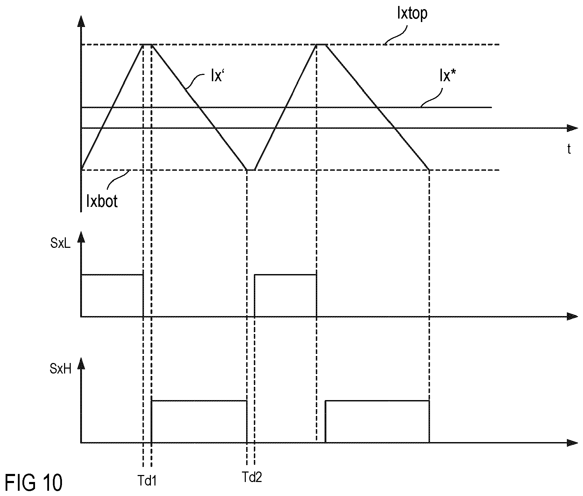

Figure 10 shows signal diagrams that illustrate one example of how the drive signals S31H-33L may be generated by the hysteresis controllers 63a, 63b, 63c in order to control the phase currents Ia, Ib, Ic. More specifically, Figure 10 shows signal diagrams of an phase current Ix, which is an arbitrary one of the three phase currents Ia, Ib, Ic, and of drive signals SxL, SxH of a low-side switch and a high-side switch of the respective switching stage. In Figure 10, SxL denotes the drive signal of the low-side switch and SxH denotes the drive signal of the high-side switch. Just for the purpose of illustration, an on-level of the respective switch is represented by a high signal level and an off-level is represented by a low signal level in the example shown in Figure 10. Further, Ixtop denotes the first current limit (the upper current limit) and Ixbot denotes the second current limit (the lower current limit) in this example.

In the power converter according to Figure 2, in each of the three phases, independent of the polarity of the respective input voltage Ua, Ub, Uc, the respective phase current Ia, Ib, Ic increases when the low-side switch 31L, 32L, 33L of the respective switching stage 11, 12, 13 is switched on and decreases when the high-side switch 31H, 32H, 33H of the respective switching stage 11, 12, 13 is switched on.

Referring to Figure 10, the hysteresis controller 63a, 63b, 63c in each branch switches on and off the low-side switch and the high-side switch alternatingly and such that only one of these switches is switched on at the same time. More specifically, the hysteresis controller switches off the low-side switch when the phase current signal Ix' reaches the first threshold Ixtop and, after a first dead time Td1, switches on the high-side switch so that the phase current Ix decreases. When the phase current signal Ix' reaches the second threshold Ixbot the hysteresis controller switches off the high-side switch and, after a second delay time Tdel2, again switches on the low-side switch. This causes the phase current Ix to oscillate in an essentially triangular fashion between the first threshold Ixtop and the second threshold Ixbot, so that the average phase current Ix_avg essentially equals the phase current reference Ix*. Moreover, a ZVS operation of the high-side side switch is achieved during the first dead time Td1, and a ZVS operation of the low-side switch is achieved during the second dead time Td2.

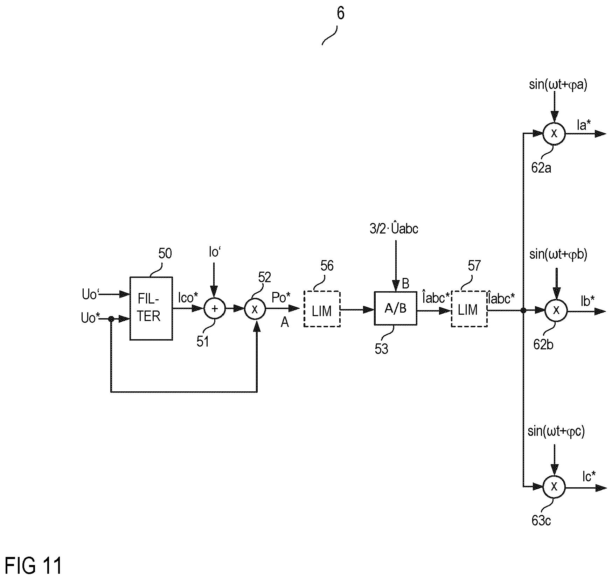

Figure 11 shows a modification of the current reference controller 6 shown in Figures 9B and 9C. The current reference controller 6 according to Figure 11 is different from the controller 4 according to Figure 11 in that each output branch instead of the conductance reference G* receives the overall phase current reference Îabc* from the divider, which is implemented in accordance with Figure 9C. The limiters 56, 57 explained with reference to Figures 9C are optional in the current reference controller 6 according to Figure 11.

In the controller 4 according to Figure 11, each of the phase current references Ia*, Ib*, Ic* is calculated by a respective multiplier 62a, 62b, 62c based on the overall phase current reference Îabc* and a sinusoidal signal such that

$$Ia^* = \hat{I}abc \cdot \sin(\omega t + \varphi a + \varphi ps) \tag{7a}$$

$$Ib^* = \hat{I}abc \cdot \sin(\omega t + \varphi b + \varphi ps) \tag{7b}$$

$$Ic^* = \hat{I}abc \cdot \sin(\omega t + \varphi c + \varphi ps) \tag{7c},$$

wherein ωt denotes a timely varying phase angle of the input voltage system Ua, Ub, Uc, ω = 2πf is the frequency of the input voltage system Ua, Ub, Uc (wherein f, e.g., is 50Hz or 60Hz). As outlined above there is a phase shift between the input voltages Ua, Ub, Uc of the input voltage system, wherein these voltages are given by

$$Ua = \widehat{U}a \cdot \sin(\omega t + \varphi a) \qquad (8a)$$

$$Ub = \widehat{U}b \cdot \sin(\omega t + \varphi b) \qquad (8b)$$

$$Uc = \widehat{U}c \cdot \sin(\omega t + \varphi c) \qquad (8c),$$

where Ûa, Ûb, Ûc are the amplitudes of the voltages Ua, Ub, Uc. The phase shifts between the input voltages are represented by φa, φb, cpc, wherein, for example, φa=0, φb=2π/3, and πc=4π/3. φps is optional and represents a desired phase shift between phase current reference Ia*, Ib*, Ic* and the respective input voltage Ua, Ub, Uc. φps is between 0 and 10°, for example. (ωt+φa), (ωt+φb), (ωt+φc) are also referred to as phase angles of the phase voltages Ua, Ub, Uc in the following.

The timely varying phase angle ωt may be obtained by a PLL (Phase Locked Loop) based on one or more of the input voltages Ua, Ub, Uc, for example.

In the example explained herein before, the current band value Ibnd is constant. This, however, may result in relatively high conduction losses in the switches of the switching stages 11, 12, 13 when the output power is significantly lower than the maximum output power. According to another example, the current band value Ibnd is not constant but the current band value for each phase varies over one period of the respective input voltage system. According to one example, the time dependent current band values Ibnda(t), Ibndb(t), Ibndc(t) are calculated as follows:

$$Ibnda(t) = Ibnd(1 - \beta M^2 \sin^2(\omega t + \varphi a)) \qquad (9a)$$

$$Ibndb(t) = Ibnd(1 - \beta M^2 \sin^2(\omega t + \varphi b)) \qquad (9b)$$

$$Ibndc(t) = Ibnd(1 - \beta M^2 \sin^2(\omega t + \varphi c)) \qquad (9c),$$

wherein Ibnd may be calculated as explained herein above, and wherein β is a current band adaption factor that is selected from between 0 and 1. If β=0 the current band values are constant, Ibnda(t) = Ibndb(t) = Ibndc(t) = Ibnd.

If β>0, the current band values Ibnda(t), Ibndb(t), Ibndc(t) are dependent on the phase angle of the respective phase voltage Ua, Ub, Uc and vary over one period of the phase voltages Ua, Ub, Uc and current references Ia*, Ib*, Ic*. In the following, Ibndx(t) denotes an arbitrary one of the current band values Ibnda(t), Ibndb(t), Ibndc(t) and (ωt+φx) denotes the phase angle of the respective phase voltage Ux. Referring to equations (9a)-(9b), the variable current band value Ibndx(t) includes the term $\sin^2(\omega t + \varphi x)$ which is dependent on the phase angle of the respective phase voltage Ux and is referred to as phase angle dependent term in the following. The phase angle is in phase with the respective phase voltage Ux , wherein the phase angle dependent term is such that a local minimum of the current band value Ibndx(t) occurs, when the phase angle (ωt+φx) of the phase voltage Ux is a multiple of π/2, that is, whenever when $\sin^2(\omega t + \varphi x)$=1. Further, a local maximum of the current band value Ibndx(t) occurs, when the phase angle (ωt+φx) of the phase voltage Ux is a multiple of π, that is, whenever $\sin^2(\omega t + \varphi x)$=0.

When the phase shift between the phase voltage Ux and the corresponding current reference Ix* is zero, φps=0, the current band value Ibndx(t) is in phase with the respective current reference Ix*. Otherwise, there is a phase shift between the phase current reference Ix* and the current band value Ibndx(t).

input current reference Ia*, Ib*, Ic* and, over one period of the input current reference Ia*, Ib*, Ic*, decreases as the magnitude of the input current reference increases. A minimum occurs when $\sin^2(\omega t + \varphi x)$=1, wherein φx denotes any one of φa, φb, cpc, that is, when ωt+φx is a multiple of π/2. Thus, the current band value Ibnda(t), Ibndb(t), Ibndc(t) has a local minimum when the phase angle ωt+φx is a multiple of π/2 and has a local maximum when the phase angle is a multiple of π.

Calculating the current band values in accordance with equations (9a) - (9c) does not affect the maximum switching frequency fsw, which is given by equation (2a). That is, the maximum switching frequency fsw_max is independent of the current band adaption factor β. The minimum switching frequency fsw_min, however, is dependent on the current band adaption factor β and increases as β increases,

$$fsw\_\min = \frac{Upn}{8 \cdot Lx \cdot Ibnd} \cdot \frac{1-M^2}{1-\beta M^2} = fsw\_\max \cdot \frac{1-M^2}{1-\beta M^2} \qquad (10),$$

wherein Lx denotes the inductance of the inductor of the respective phase. Thus, the frequency range becomes smaller as the current band adaption factor β increases, wherein the minimum switching frequency fsw_min equals the maximum switching frequency fsw_max if β=1.

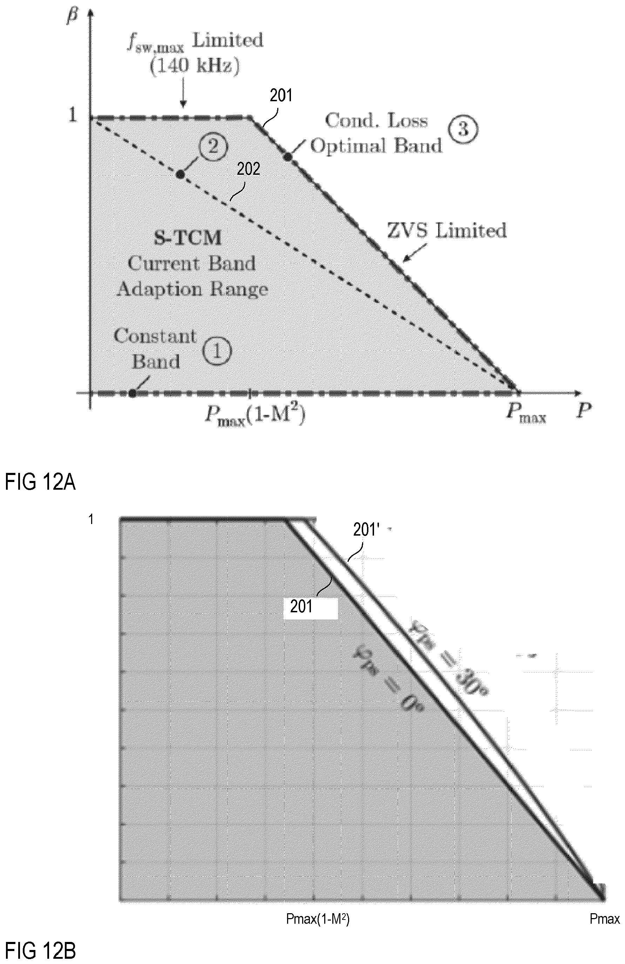

According to one example, the current band adaption factor β is selected dependent on the output power P of the power converter as illustrated in Figure 12A. The output power P is the average output power over one period of the input voltage system Ua, Ub, Uc. The maximum output power Pmax is as explained herein above.

In Figure 12A, curve 201 represents the maximum of the current band adaption factor β that can be selected dependent on the output power P. Selecting the current band adaption factor β in accordance with curve 201 results in minimum conduction losses. Nevertheless, any current band adaption factor β below curve 201 may be selected as well.

When selecting the current band adaption factor β in accordance with curve 201, β=1, so that the switching frequency is constant fsw_max = fsw_min if the output power P is below Pmax(1-M²). As the output power becomes higher than Pmax(1-M²) the current band adaption factor β linearly decreases until the current band adaption factor β is zero, so that the current band value is constant, when the output power P equals the maximum output power Pmax. Selecting the current band adaption factor β from a range above curve 201 would result in a non-ZVS operation of the power converter.

Curve 201 represents a scenario when the phase shift φps between the phase voltages Ua, Ub, Uc and the current references Ia*, Ib*, Ic* is zero, φps=0. For φps≠0, the maximum limit of the current band adaption factor β decreases non-linearly, as the output power increases. This is illustrated by curve 201' in Figure 12B. Curve 201' in Figure 12B, is based on a unusual high phase shift of φps=30°, so that it can be seen that for usual phase shifts of between 0° and 10° the linear relationship explained with reference to Figure 12B is a good approximation.

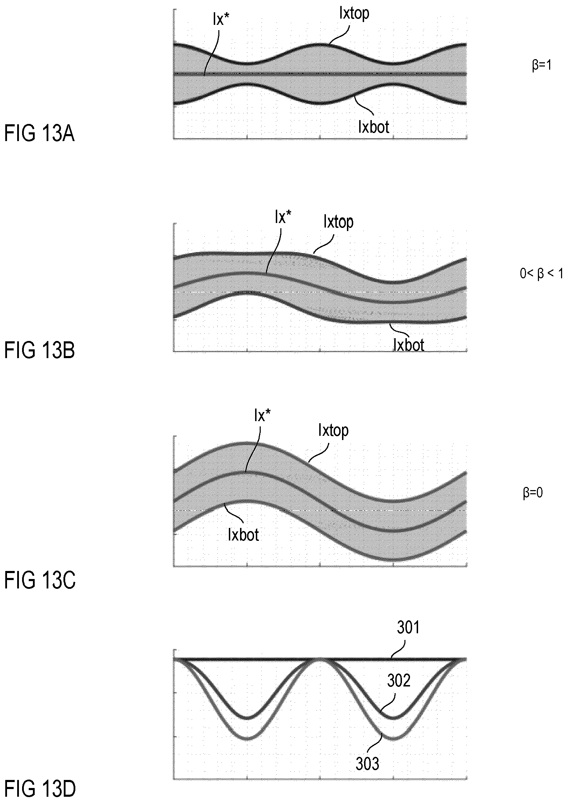

Figures 13A - 13C illustrate the upper current limit Ixtop and the lower current limit Ixbot, the phase current reference Ix*, and the switching frequency fsw of one phase when the current band adaption factor β is selected based on curve 201. Figures 13A - 13C illustrate different load scenarios, wherein β=1 in Figure 13A, β=0 in Figure 13C and 0 < β < 1 in Figure 13B. In Figure 13D, curve 301 represents the switching frequency associated with the scenario illustrated in Figure 13A. Because the current band adaption factor β is 1 (β=1), the switching frequency is constant in this case, and the current band value Ibndx(t) is varying. Curve 302 represents the switching frequency associated with the scenario illustrated in Figure 13B, and curve 303 represents the switching frequency associated with the scenario illustrated in Figure 13C, which is identical with the example illustrated in Figure 8E. That is, because the current band adaption factor β is zero (β=0), the current band value is constant (Ibndx(t) = Ibnd). As can be seen from Figures 13A - 13D, the frequency variation decreases as β increases.

According to one example, the current band adaption factor β is selected dependent on the output power P such that β linearly decreases from β=1 to β=0 as the output power P decreases from zero to the maximum output power Pmax. Curve 202 in Figure 12A represents selecting the current band adaption factor β in this way.

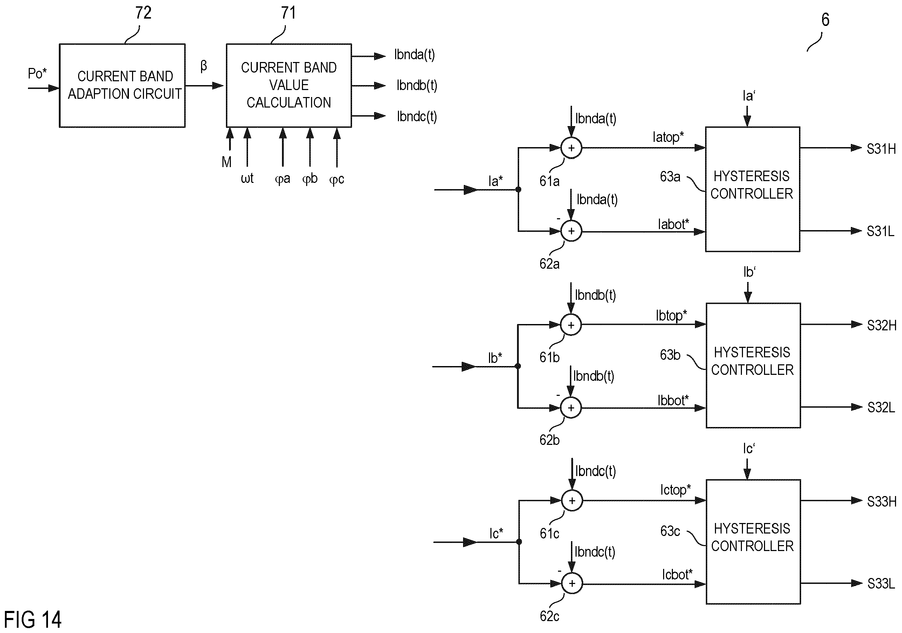

Figure 14 illustrates one example of a current reference controller 6 in which timely varying current band values Ibnda(t), Ibndb(t), Ibndc(t) are used to calculate the first current limits Iatop, Ibtop, Ictop and the second current limits Iabot, Ibbot, Icbot. For this, the adder 61a, 61b, 61c and the subtractor 62a, 62b, 62c in each branch receives a respective one of the timely varying current band values Ibnda(t), Ibndb(t), Ibndc(t). The current band values Ibnda(t), Ibndb(t), Ibndc(t) are calculated by a current band calculation circuit 71 in accordance with equations (9a) - (9c). The current band calculation circuit receives the current band adaption factor β from a current band adaption circuit 72, and receives the phase shifts φa, φb, φc and the timely varying phase angle ωt explained above may be obtained by a PLL (Phase Locked Loop) based on one or more of the input voltages Ua, Ub, Uc, for example. The current band adaption circuit 72 that determines β in accordance with any of the examples explained with reference to Figure 12A dependent on the output power P. According to one example, the current band adaption circuit 72 receives the output power reference Po* explained herein before as a representation of the output power P.

The power converter explained herein before is a 3-phase converter. This, however, is only example. The method for regulating the DC voltage Upn and controlling the phase current Ia, Ib, Ic in each phase of the 3-phase converter can be used in a 1-phase converter (single phase converter) as well.

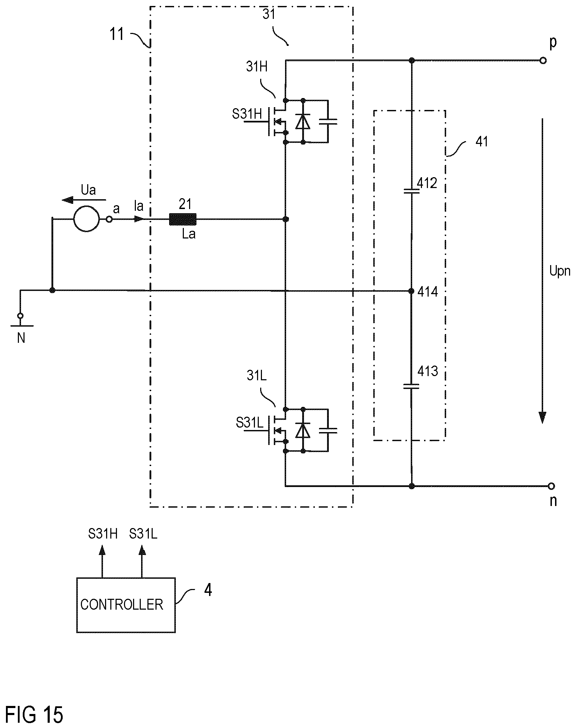

One example of a 1-phase power converter operated as a rectifier is illustrated in Figure 15. This converter includes one phase 11, which may correspond to the first phase 11 illustrated in and explained with reference to Figur 2 herein before, connected to an AC node a, which may correspond to the first AC node illustrated in and explained with reference to Figur 2 herein before. In this 1-phase converter, DC capacitor circuit 41 is implemented as illustrated in 2B and the ground N, to which the AC input voltage Ua is referenced, is connected to a tap 414 of the DC capacitor circuit 41. The "tap" is a circuit node where the two capacitors 412, 413 are connected. According to one example, the capacitors 412, 413 have essentially the same capacitance, so that the electrical potential at the tap 414 and the ground node is about Upn/2 lower than at the first DC node p and about Upn/2 higher than at the second DC node. In a 3-phase converter as explained above, the electrical potential at the ground node N "automatically" adjusts in this way, even when the output capacitor circuit 41 is implemented as illustrated in Figure 3A, so that there is no direct connection between the ground node N and the output capacitor circuit 41. Nevertheless, in a 3-phase converter, the output capacitor circuit 41 may also be implemented as illustrated in Figures 3B and 15 and the ground node N be connected to the tap 414 of the output capacitor circuit 41.

In the 1-phase converter according to Figure 15, the converter 4 may be implemented in accordance with any of the examples explained herein before. That is, the controller 4 may include a current reference controller 5 and a phase current controller 6. The phase current controller 6 may be implemented in accordance with any of the examples explained herein before, but includes only one of the branches explained before, namely the branch receiving the first current reference Ia* and controlling switches 31H, 31L.

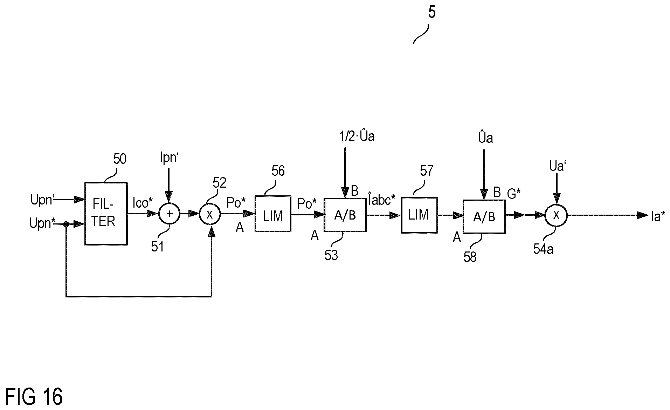

The current reference controller 5 may be implemented in accordance with any of the examples explained herein above, but includes only one of the output branches explained before, namely the output branch generating the first current reference Ia*. One example of a current reference controller 5 of the controller 4 in the 1-phase converter is illustrated in Figure 16. Just for the purpose of illustration this current reference controller 5 is based on the current reference controller shown in Figure 9C, wherein the current reference controller according to Figure 16 only includes the first output branch providing the first current reference Ia*. Additionally, divider 53 divides the output power reference Po* by Ûa/2 (instead of 3Ûabc/2), wherein Ûa is the amplitude of the input voltage Ua. Equivalently, divider 58 receives Ûa instead of Ûabc.

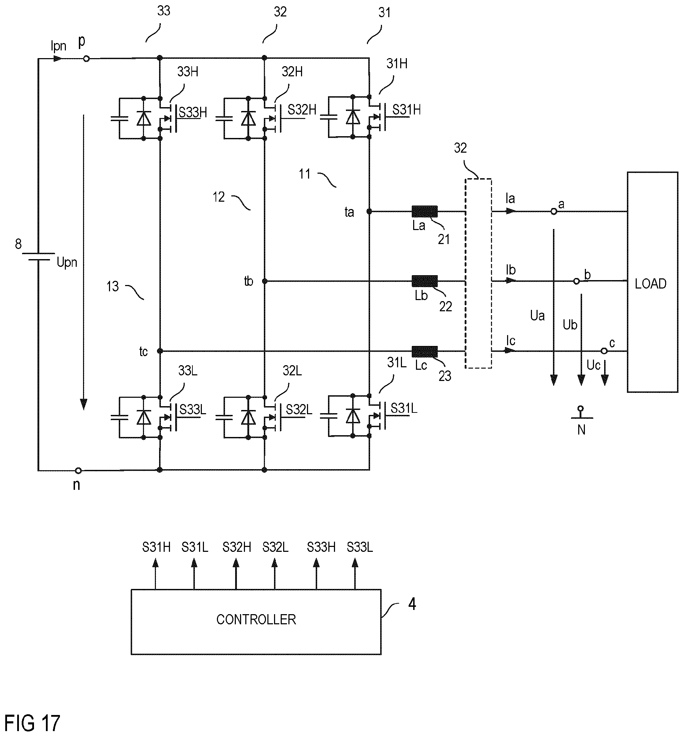

Referring to the above, the 3-phase power converter according to Figure 1 is not restricted by used as a 3-phase rectifier but may also be uses as a 3-phase inverter. One example of a 3-phase power converter operated as a 3-phase inverter is illustrated in Figure 17.

In the 3-phase inverter according to Figure 17, the switching stages 31, 32, 33 are implemented in the same way as illustrated in Figure 2 and each include a half-bridge with a high-side switch 31H, 32H, 33H and a low-side switch 31L, 32L, 33L. At the first and second DC nodes p, n the inverter receives a DC voltage Upn and a DC current from any kind of DC power source. At the AC nodes a, b, c the inverter provides the phase currents Ia, Ib, Ic to a load, which may be a motor, a power grid, or the like. In case of a motor, the inductors 21, 22, 23 may be inductors of the motor or may be inductors in addition to inductors of the motor.

Like the rectifier explained above, the inverter generates the phase currents Ia, Ib, Ic based on a switched-mode operation of the switching stages 31, 32, 33 dependent on phase current references Ia*, Ib*, Ic*. The difference being that the inverter generates the phase currents Ia, Ib, Ic based on the DC voltage Upn. The phase currents Ia, Ib, Ic may be generated based on the phase current references Ia*, Ib*, Ic* in accordance with any of the methods explained with reference to Figures 7 et seq.

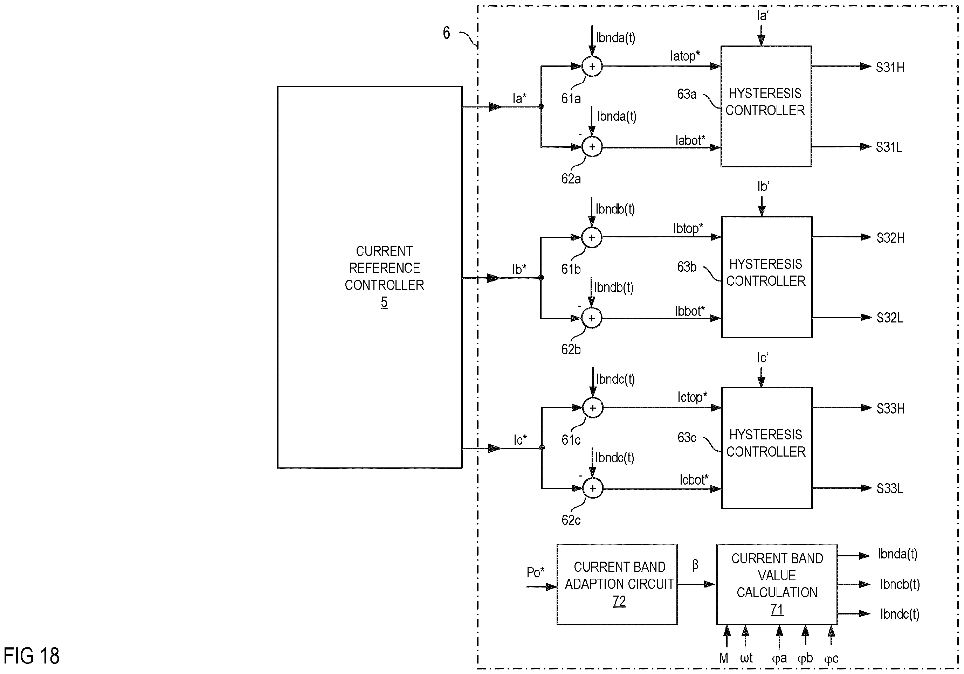

One example of a controller 4 that is configured to operate the inverter shown in Figure 17 is illustrated in Figure 18. This converter 4 is implemented in accordance with the controller 4 explained above and includes a current reference controller 5 that provides the current references Ia*, Ib*, Ic* and a phase current controller 6. Just for the purpose of illustration, the phase current controller 6 shown in Figure 18 is implemented in accordance with the phase current controller 6 shown in Figure 14 in which the individual output branches receive different current band values that are dependent on a phase angle of the respective current reference Ia*, Ib*, Ic*. This, however, is only an example. According to another example, the band adaption circuits 71, 72 are omitted and each of the output branches receives the same current band value (Ibnd in the examples explained above).

The current reference controller 5 may be implemented in various ways, dependent on the specific application in which the inverter is used. When the inverter is a power grid inverter, for example, the current reference controller 5 may generate the current references Ia*, Ib*, Ic* such that they are in phase with the three phases of the power grid that receives the phase currents Ia, Ib, Ic and with amplitudes that are dependent on an input power the inverter receives from the DC power source 8. When the inverter is a power grid inverter, for example, the current reference controller 5 may generate the current references Ia*, Ib*, Ic* such that they have a frequency and amplitude as required by the motor that receives the phase currents Ia, Ib, Ic. In each case, the current reference controller 5 may provide the frequency and phase information ωt, φa, φb, φc of the current references Ia*, Ib*, Ic* and a power reference Po* to the current band circuits 71, 72 (if they are is used) in the phase current controller 6. The power reference Po* may represent an input power received by the inverter in order to generate the phase currents Ia, Ib, Ic.

In the inverter shown in Figure 17, the phase currents Ia, Ib, Ic increase when the respective high-side switch 31H, 32H, 33H is switched on and decrease when the respective low-side switch 31L, 32L, 33L is switched on. Thus, operating principle of the hysteresis controllers 63a, 63b, 63 in the phase current controller 6 is equivalent to the operating principle illustrated in Figure 10 and only different in that in each phase the high-side switch 31H, 32H, 33H is switched off and the low-side switch 31L, 32L, 33L is switched on when the respective phase current Ia, Ib, Ic reaches the respective first threshold Iatop, Ibtop, Ictop, and the low-side switch 31L, 32L, 33L is switched off and the high-side switch 31H, 32H, 33H is switched on when the respective phase current Ia, Ib, Ic reaches the respective second threshold Iabot, Ibbot, Icbot.

Referring to equations (9a)-(9b) varying the current band values Ibnda(t), Ibndb(t), Ibndc(t) dependent on the phase $\omega t+\varphi a$, $\omega t+\varphi b$, $\omega t+\varphi c$ of the respective phase voltages Ua, Ub, Uc requires information on the modulation index M, which is given by equation (3), In an inverter, the alternating phase currents Ia, Ib, Ic causes alternating voltages Ua, Ub, Uc between the AC nodes a, b, c and a real or a virtual ground node N of the load. The amplitude Ûabc of these voltages Ua, Ub, Uc and their phase angles can be measured, so that M and the varying current band values Ibnda(t), Ibndb(t), Ibndc(t)can be calculated based on equation (3).

Examples of power conversion methods using sinusoidal TCM (S-TCM) are explained in detail herein above. Some of the aspects explained above are summarized in the following by way of numbered examples.

Example 1 - A method, including: providing a phase current reference for at least one phase of a power converter, wherein the at least one phase comprises an inductor and a switching stage coupled to the inductor; providing a current band value for the at least one phase; calculating a first current limit and a second current limit based on the phase current reference and the current band value; and modulating a phase current of the at least one phase such that the phase current oscillates between the first current limit and the second current limit.

Example 2 - The method of example 1, wherein the current band value is constant.

Example 3 - The method of example 2, wherein an amplitude of the phase current reference has a predefined maximum, and wherein the current band value is equal to or greater than the predefined maximum of the amplitude.

Example 4 - The method of example 1, wherein the phase current is associated with a phase voltage, wherein the phase voltage is a voltage between an AC node of the at least one phase and ground node, wherein the phase voltage has a phase angle, and wherein the current band value is dependent on the phase angle.

Example 5 - The method of example 4, wherein the ground node is one of a real ground node and a virtual ground node.

Example 6 - The method of example 4 or 5, wherein the current band value is dependent on the phase angle such that the current band value reaches a local minimum when the phase angle is a multiple of $\pi/2$, and that the current band value reaches a local maximum when the phase angle is a multiple of $\pi$.

Example 7 - The method of example 6, wherein a dependency of the current band value is dependent on the phase angle is given by a sine squared function.

Example 8 - The method of claim 6 or 7, wherein the current band value is further dependent on a power (P) transferred by the power converter.

Example 9 - The of any one of claims 6 to 8, wherein the current band value is further dependent on an modulation index, wherein the modulation index is dependent on a phase voltage of the at least one phase, and a DC voltage at DC nodes of the power converter.

Example 10 - The method of any one of the preceding claims, wherein the phase current reference and the current band value are adapted to one another such that the first current limit is equal to or higher than zero, and that the second current limit is equal to or lower than zero.

Example 11 - The method of any one of the preceding claims, wherein the switching stage comprises a first switch and a second switch; and wherein modulating the phase current of the at least one phase comprises alternatingly switching on and switching off the first switch and the second switch.

Example 12 - The method of claim 11, wherein alternatingly switching on and switching off the first switch and the second switch includes waiting for a first dead time after switching off the first switch and before switching on the second switch, and waiting for a second dead time after switching off the second switch and before switching on the first switch.

Example 13 - The method of claim 12, wherein alternatingly switching on and switching off the first switch and the second switch includes using a hysteresis controller that receives the first current limit, the second current limit and a phase current signal representing the phase current.

Example 14 - The method of any one of the examples 11 to 12, wherein each of the first switch and the second switch comprises a superjunction transistor.

Example 15 - The method of any one of examples 1 to 14, wherein the at least one phase is connected between an AC node and DC nodes of the converter.

Example 16 - The method of example 15, wherein the power converter is a rectifier, wherein the phase current is an input current received at the AC node, and wherein the phase current is used to generate a DC voltage between the DC nodes.

Example 17 - The method of any one of examples 1 to 14, wherein the power converter is an inverter, wherein the phase current is an output current provided to a load at the AC node, and wherein the phase current is generated based on a DC voltage received at the DC nodes.

Example 18 - The method of any one of the preceding claims, wherein the power converter is a 3-phase converter comprising three phases.

Example 19 - The method of claims 17 and 18, wherein the load is 3-phase power grid.

Example 20 - The method of claims 17 and 18, wherein the load is a 3-phase motor.

Example 21 - A power converter, including at least one phase having an inductor and a switching stage coupled to the inductor; and a controller, wherein the controller is configured to provide a phase current reference for the at least one phase, provide a current band value for the at least one phase, calculate a first current limit and a second current limit based on the phase current reference and the current band value, and modulate a phase current of the at least one phase such that the phase current oscillates between the first current limit and the second current limit.

Example 22 - The power converter of example 21, wherein the at least one phase (11, 12, 13) is coupled between an AC node (a, b, c) and two DC node (p, n).

Example 23 - The power converter of example 22, wherein the power converter is a 3-phase power converter including three phases (11, 12, 13) each coupled between a respective one of three AC nodes (a, b, c) and two DC nodes (p, n).

Example 24 - The power converter of example 22, wherein the power converter is a 1-phase power converter including only one phase (11) coupled between an AC node (a) and two DC nodes (p, n).

Example 25 - The power converter of any one of examples 22 to 24, wherein the switching stage includes a half-bridge with a high-side side and a low-side switch, wherein a series circuit including the high-side side switch and the low-side switch is connected between the DC nodes, and wherein the inductor is coupled between a tap of the half-bridge and the AC node.

Example 26 - A system including a power converter of any one of examples 23 to 25, and a power grid connected to the three AC nodes.

Example 27 - A system including a power converter of any one of examples 23 to 25, a DC power source coupled to the DC nodes, and a load coupled to the three AC nodes.

Example 28 - The system of example 27, wherein the load is a 3-phase power grid.

Example 29 - The system of example 27, wherein the load is a 3-phase motor.

**Claims**

1. A method, comprising:

providing a phase current reference (Ia*, Ib*, Ic*) for at least one phase (11, 12, 13) of a power converter, wherein the at least one phase (11, 12, 13) comprises an inductor (21, 22, 23) and a switching stage (31, 32, 33) coupled to the inductor (21, 22, 23);

providing a current band value (Ibnd; Ibnda(t), Ibndb(t), Ibndc(t)) for the at least one phase (11, 12, 13);

calculating a first current limit (Iatop, Ibtop, Ictop) and a second current limit (Iabot, Ibbot, Icbot) based on the phase current reference (Ia*, Ib*, Ic*) and the current band value (Ibnd; Ibnda(t), Ibndb(t), Ibndc(t)); and

modulating a phase current (Ia, Ib, Ic) of the at least one phase (11, 12, 13) such that the phase current (Ia, Ib, Ic) oscillates between the first current limit (Iatop, Ibtop, Ictop) and the second current limit (Iabot, Ibbot, Icbot).

2. The method of claim 1,
wherein the current band value (Ibnd) is constant.

3. The method of claim 2,
wherein an amplitude of the phase current reference (Ia*, Ib*, Ic*) has a predefined maximum ($\hat{I}x\_max$), and
wherein the current band value (Ibnd) is equal to or greater than the predefined maximum ($\hat{I}x\_max$) of the amplitude.

4. The method of claim 1,
wherein the phase current (Ia, Ib, Ic) is associated with a phase voltage (Ua, Ub, Uc),
wherein the phase voltage is a voltage between an AC node (a, b, c) of the at least one phase (11, 12, 13) and a ground node,
wherein the phase voltage (Ua, Ub, Uc) has a phase angle ($\omega t+\varphi a$, ($\omega t+\varphi b$, $\omega t+\varphi c$), and
wherein the current band value (Ibnda(t), Ibndb(t), Ibndc(t)) is dependent on the phase angle.

5. The method of claim 4,
wherein the current band value (Ibnda(t), Ibndb(t), Ibndc(t)) is dependent on the phase angle ($\omega t+\varphi a$, $\omega t+\varphi b$, $\omega t+\varphi c$) such
that the current band value (Ibnda(t), Ibndb(t), Ibndc(t)) reaches a local minimum when the phase angle is a multiple of $\pi/2$, and
that the current band value (Ibnda(t), Ibndb(t), Ibndc(t)) reaches a local maximum when the phase angle is a multiple of $\pi$.

6. The method of claim 4,
wherein the current band value (Ibnda(t), Ibndb(t), Ibndc(t)) is further dependent on a power (P) transferred by the power converter.

7. The method of any one of the preceding claims,
wherein the phase current reference (Ia*, Ib*, Ic*) and the current band value (Ibnd; Ibnda(t), Ibndb(t), Ibndc(t)) are adapted to one another such
that the first current limit (Iatop, Ibtop, Ictop) is equal to or higher than zero, and
that the second current limit (Iabot, Ibbot, Icbot) is equal to or lower than zero.

8. The method of any one of the preceding claims,
wherein the switching stage (31, 32, 33) comprises a first switch (31L-33L) and a second switch (31H-33H); and
wherein modulating the phase current (Ia, Ib, Ic) of the at least one phase (21, 11, 22, 12, 23, 13) comprises alternatingly switching on and switching off the first switch (31L-33L) and the second switch (31H-33H).

9. The method of claim 8,
wherein alternatingly switching on and switching off the first switch (31L-33L) and the second switch (31H-33H) comprises using a hysteresis controller (63a, 63b, 63c) that receives the first current limit (Iatop, Ibtop, Ictop), the second current limit (Iabot, Ibbot, Icbot) and an phase current signal (Ia', Ib', Ic') representing the phase current (Ia, Ib, Ic).

10. The method of any one of claims 1 to 9,
wherein the at least one phase (11, 12, 13) is connected between an AC node (a, b, c) and DC nodes (p, n) of the converter.

11. The method of claim 10,
wherein the power converter is a rectifier,

wherein the phase current (Ia, Ib, Ic) is an input current received at the AC node, and
wherein the phase current (Ia, Ib, Ic) is used to generate a DC voltage (Upn) between the DC nodes (p, n).

12. The method of any one of claims 1 to 9,
wherein the power converter is an inverter,
wherein the phase current (Ia, Ib, Ic) is an output current provided to a load at the AC node, and
wherein the phase current (Ia, Ib, Ic) is generated based on a DC voltage received at the DC nodes (p, n).

13. The method of any one of the preceding claims, wherein the power converter is a 3-phase converter comprising three phases.

14. A power converter, comprising:

at least one phase (11, 12, 13) comprising an inductor (21, 22, 23) and a switching stage (31, 32, 33) coupled to the inductor (21, 22, 23); and
a controller (4),
wherein the controller is configured to
provide a phase current reference (Ia*, Ib*, Ic*) for the at least one phase (11, 12, 13),
define a current band value (Ibnd; Ibnda(t), Ibndb(t), Ibndc(t)) for the at least one phase (11, 12, 13),
calculate a first current limit (Iatop, Ibtop, Ictop) and a second current limit (Iabot, Ibbot, Icbot) based on the phase current reference (Ia*, Ib*, Ic*) and the current band value (Ibnd; Ibnda(t), Ibndb(t), Ibndc(t)), and
modulate a phase current (Ia, Ib, Ic) of the at least one phase (21, 11, 22, 12, 23, 13) such that the phase current (Ia, Ib, Ic) oscillates between the first current limit (Iatop, Ibtop, Ictop) and the second current limit (Iabot, Ibbot, Icbot).

FIG 1

FIG 2

FIG 3A

FIG 3B

FIG 4

FIG 5

FIG 6

DETERMINING A PHASE CURRENT REFERENCE OF AT LEAST ONE PHASE OF THE PFC RECTIFIER — 101

DEFINING A CURRENT BAND VALUE FOR THE AT LEAST ONE PHASE — 102

CALCULATING A FIRST CURRENT LIMIT AND A SECOND CURRENT LIMIT BASED ON THE PHASE CURRENT REFERENCE AND THE CURRENT BAND VALUE — 103

MODULATING THE PHASE CURRENT OF THE AT LEAST ONE PHASE SUCH THAT THE PHASE CURRENT OSCILLATES BETWEEN THE FIRST CURRENT LIMIT AND THE SECOND CURRENT LIMIT — 104

FIG 7

FIG 8A

FIG 8B

FIG 8C

FIG 8D

FIG 8E

FIG 9A

FIG 9B

FIG 9C

FIG 10

FIG 11

FIG 12A

FIG 12B

FIG 13A

FIG 13B

FIG 13C

FIG 13D

FIG 14

FIG 15

FIG 16

FIG 17

FIG 18

Europäisches
Patentamt

European
Patent Office

Office européen
des brevets

# EUROPEAN SEARCH REPORT

Application Number

EP 20 19 7078

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BOSE B K: "AN ADAPTIVE HYSTERESIS-BAND CURRENT CONTROL TECHNIQUE OF A VOLTAGE-FED PWM INVERTER FOR MACHINE DRIVE SYSTEM", IEEE TRANSACTIONS ON INDUSTRIAL ELECTRONICS, IEEE SERVICE CENTER, PISCATAWAY, NJ, USA, vol. 37, no. 5, 1 October 1990 (1990-10-01), pages 402-408, XP000162780, ISSN: 0278-0046, DOI: 10.1109/41.103436 | 1,2,4,6, 8-14 | INV. H02M7/219 H02M7/5387 ADD. H02M1/00 |
| A | * equations 28,41; figures 1,2,6,9 * | 5,7 | |
| X | RAHMAN K M ET AL: "Variable-Band Hysteresis Current Controllers for PWM Voltage-Source Inverters", IEEE TRANSACTIONS ON POWER ELECTRONICS, INSTITUTE OF ELECTRICAL AND ELECTRONICS ENGINEERS, USA, vol. 12, no. 6, 1 November 1997 (1997-11-01), XP011043118, ISSN: 0885-8993 | 1,2,4-6, 8-14 | |
| A | * abstract; figures 1,2,4,5,6,12 * * Section I, II, III * | 7 | TECHNICAL FIELDS SEARCHED (IPC) H02M |
| X | CN 110 890 835 A (VERTIV ENERGY SYSTEMS INC) 17 March 2020 (2020-03-17) | 1,3,4, 6-14 | |
| A | * figures 1, 5C, 7B * | 2,5 | |

-/--

The present search report has been drawn up for all claims

| Place of search | Date of completion of the search | Examiner |
|---|---|---|
| The Hague | 16 February 2021 | Kail, Maximilian |

EPO FORM 1503 03.82 (P04C01)

Europäisches Patentamt

European Patent Office

Office européen des brevets

## EUROPEAN SEARCH REPORT

Application Number

EP 20 19 7078

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SABI KAMAL ET AL: "Delay Mitigation in High Frequency Dual Current Programmed Mode Control GaN-Based ZVS Inverter", 2019 20TH WORKSHOP ON CONTROL AND MODELING FOR POWER ELECTRONICS (COMPEL), IEEE, 17 June 2019 (2019-06-17), pages 1-7, XP033581315, DOI: 10.1109/COMPEL.2019.8769704 [retrieved on 2019-07-22] | 1,3,4, 6-12,14 | |
| A | * figures 1,2 * ----- | 2,5 | |
| X | WANG QIONG ET AL: "A Method for Increasing Modulation Index of Three Phase Triangular Conduction Mode Converter", 2018 IEEE 19TH WORKSHOP ON CONTROL AND MODELING FOR POWER ELECTRONICS (COMPEL), IEEE, 25 June 2018 (2018-06-25), pages 1-5, XP033402378, DOI: 10.1109/COMPEL.2018.8460146 [retrieved on 2018-09-10] | 1,3,4, 6-14 | |
| A | * figures 1,4 * ----- | 2,5 | TECHNICAL FIELDS SEARCHED (IPC) |

The present search report has been drawn up for all claims

| Place of search | Date of completion of the search | Examiner |
|---|---|---|
| The Hague | 16 February 2021 | Kail, Maximilian |

EPO FORM 1503 03.82 (P04C01)

## ANNEX TO THE EUROPEAN SEARCH REPORT
## ON EUROPEAN PATENT APPLICATION NO.

EP 20 19 7078

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2021

| Patent document cited in search report | Publication date | Patent family member(s) | Publication date |
|---|---|---|---|
| CN 110890835 A | 17-03-2020 | NONE | |

EPO FORM P0459

For more details about this annex : see Official Journal of the European Patent Office, No. 12/82